# EUROPEAN PATENT SPECIFICATION

(11) **EP 3 491 914 B1**
(45) Date of publication and mention of the grant of the patent: **20.03.2024**
(21) Application number: 17001955.8
(22) Date of filing: 29.11.2017
(51) Int. Cl.: A01G 31/00

(54) **CARRIER FOR RECEIVING THIN MATS WITH CROP UNITS ROOTED THEREIN, AND DEVICE AND METHOD FOR CULTIVATING ONE OR MORE CROP UNITS**
TRÄGER ZUR AUFNAHME VON DÜNNEN MATTEN MIT DARIN VERWURZELTEN ERNTEGUTEINHEITEN SOWIE VORRICHTUNG UND VERFAHREN ZUR KULTIVIERUNG EINER ODER MEHRERER ERNTEGUTEINHEITEN
SUPPORT DE RÉCEPTION DE NATTES MINCES AVEC DES UNITÉS DE RÉCOLTE Y ÉTANT ENRACINÉES ET DISPOSITIF ET PROCÉDÉ DE CULTURE D'UNE OU PLUSIEURS UNITÉS DE RÉCOLTE

(43) Date of publication of application: 05.06.2019
(73) Proprietor: Dirven, Sebastiaan Johannes Hendricus, 4941 RG Raamsdonksveer (NL); Meteor Systems B.V., 4879 NG Etten-Leur (NL)
(72) Inventor: DIRVEN, Sebastiaan Johannes Hendricus, 4941 TG Raamsdonksveer (NL)
(74) Representative: Griebling, Onno

(56) References cited:
- EP-A1- 1 457 105
- WO-A1-2012/050449
- WO-A2-2017/025711
- JP-A- H0 286 716
- JP-A- H0 984 465
- JP-U- H0 435 753

## Description

### FIELD OF THE INVENTION

The present invention relates to a device and a method for cultivating one or more crop units. This device and method are particularly intended for application in the so called cultivation on water.

### BACKGROUND OF THE INVENTION

In the case of cultivation on water, crop units are cultivated using as little substrate as possible, such as potting soil or soil. In this melf cultivation, nutritions are largely supplied via water that is offered to a crop unit to be cultivated to be taken up by the roots thereof.

Cultivation on water is used, among other things, for leaf crops that lend themselves thereto, such as certain vegetables, including lettuce, and certain herbs, including basil.

A known method for simultaneously cultivating multiple crop units by means of cultivation on water comprises providing a carrier with a plurality of openings, and arranging in each opening thereof a plug of potting soil having therein a developing root system of a crop unit to be cultivated. The carrier with a number of plugs therein is place in a unit environment such as a water bath in which the carrier comes to float, or a container with an eb/flood regime, in which the carrier is moistened and becomes dry again in alternating manner. Due to the humid environment, the root systems in the plugs stimulated to develop themselves further to a large extend outside the plugs, in order to eventually be able to absorb water directly from the environment of the carrier.

The use of plugs from potting compost or an other loose substrate, which plugs are kept together by a root system developing itself has various disadvantages. For instance, when the root system in the plug has not developed sufficiently, such plug can disintegrate when it is handled, such as for instance in the case of removing such plug from a seed or cutting tray. This can cause a water bath to become soiled, so that, among other things, germs present in the substrate could contaminate crop units to be cultivated. Also, the disintegration of a plug could cause different plugs to obtain different dimensions, and thus to sit in the openings of a carrier under different conditions, such as at different distances to a water level provided. This may disadvantageously affect the uniformity of different crop units to be cultivated. Again another disadvantage is that plugs from loose substrate are always relatively large by themselves, because a certain volume of substrate that is offered to germinating seed or to a cutting must have certain minimum dimensions and/or ratios in order to allow a developing root system to grow in such manner that it can eventually keep together, as least substantially, the amount of substrate offered in order to form a substantially integral unit with the substrate. The size of a plug may however be advantageous in conjunction with the time a root system needs to develop sufficiently in order to be able to keep together a plug from loose substrate, in order to be able to, for example, be transplanted from a seed or cutting tray to a carrier. International Publication WO 2012/050449 A1 discloses a cultivation assembly whereby a plurality of holders are configured to hold growth substrates with the holders being supported in an ebb and flood tray.

### SUMMARY OF THE INVENTION

An object of the present invention is to provide a device and a method for cultivating one or crop units, which each are improved with respect to existing devices and methods. In particularly, it is an object to provide a device and a method which are relatively clean, and thus give little chance of contamination of crop units with germs, and which ensure a relatively large uniformity of cultivated crop units, with relatively little loss. A further object to provide a device and a method which enable a relatively short cultivation time. The device according to the invention is disclosed in claim 1 and the method in claim 6; other aspects of the invention are disclosed in the dependent claims.

Some of the above objectives are attained with:
- device for cultivating at least one crop unit, comprising per plant unit a separate medium for rooting the crop unit therein, and one or more carriers for the different media, wherein each medium comprises a relatively thin mat of a certain material;
- a method for growing at least one crop unit, comprising the step of providing one or more carriers for a medium for allowing a crop unit to be rooted therein, and providing the one or more carriers with a relatively thin mat of a specific material per crop unit.

A mat from a certain material has, by itself, a certain integrity, which a loose substrate has not have. A mat from a certain material will therefore not disintegrate, or in any case less quickly, as compared to a plug from a loose substrate. Partly due to this, a relatively large extend of uniformity is ensured when cultivating multiple crop units. Different as in the case of potting compost, a mat from a certain material does not comprise any germs, so that the chances on contamination of crop units via a water bath are reduced. Because the mat is relatively thin, germinating seed or a cutting of a crop unit to be cultivated will root throughout the mat relatively fast, so that the crop units to be cultivated can be transplanted from a seed or cutting tray to a carrier relatively quickly. Caused by this, the root system of a developing crop unit placed on a carrier will also relatively quickly reach to the volume of water offered, so that crop unit can be harvested relatively quickly.

In this context the phrase "relatively thin" is also to be understood as meaning that a thickness of the mat is smaller than a diameter thereof. In view of the relatively small thickness, a mat as intended here can also be indicated as a piece of cloth.

The certain material preferably comprises capillary material, so that among other things the mat can serve to provide moisture to germinating seed of a crop to be cultivated.

Preferably, the certain material comprises fibre material. By selecting a certain kind of fibre among other things a maximum water saturation degree of the mat can be set, so that rotting of the developing crops can be counteracted.

The fibre material may be non-woven, in order to have the mat being penetrable relatively easy for a developing root system. With the phrase "nonwoven" in any case a condition is meant in which the present fibres cohere with each other only loosely, or fluffy, so that the whole of fibres is relatively airy, and fibres still can shift somewhat with respect to each other without the mat or the piece of cloth falling apart. Such coherence of fibres is for instance known from cloth which are known under phrase "flooding mat", which are spread on a supporting surface to place crop in pots, in order to be able to keep these crops wet by keeping the cloth wet.

In an advantageous embodiment, the carrier is provided with one or more openings, wherein the mat covers one or more openings. Such a carrier makes it possible to cultivate a crop unit above a quantity of water, or to place an already cultivated crop unit after cultivation on a reservoir with a volume of water, in order to be able to provide with it water and nutrients via the reservoir upon further handling and transport. The root system of a crop unit can then extend from the lower side of the mat downwards into a supplied amount of water in the reservoir, or only extract moisture from the mat, when this is wetted with water from the reservoir by means of condensation. Such a process allows that the mat does not have to be in direct contact with a supplied amount of water.

The carrier may have a recessed portion, said one or more openings being provided at the bottom of the recessed portion. This makes it possible to water a crop unit supported by the carrier by pouring it into the recessed portion.

Preferably, an additional opening is provided in the carrier, which is left uncovered by the mat. When the carrier is furthermore placed on a reservoir in air-tight and watertight manner, such an additional opening can function as a vent hole, to allow watering through said one or more openings and via the mat, or as a hole for aerating the water volume.

The device may comprise a means for sealing the additional opening, to prevent leakage of water from a reservoir through the additional opening, as well as to prevent possible leakage via the mat and aforementioned openings, by maintaining an airtight closure of a reservoir.

The carrier may have a circumferential wall which extends over a certain height above the mat, for laterally supporting a crop rooting in the mat.

Adjacent, or around the recessed portion, the carrier may have a part that runs towards the recessed portion, for sprinkling with water and letting this run away towards the recessed portion.

The mat may be fixed to the carrier, for example by ultrasonic welding. In this way it can be prevented that the mat comes loose from the carrier, when the mat is arranged on the top side of the carrier and the carrier is tilted, or it can be made possible that the mat is mounted on the underside of the carrier.

Preferably, however, the mat is fittingly shaped to be arranged in a recessed portion as previously mentioned. The mat can be supported by a bottom of the recessed portion, in which said one or more openings are provided, or be supported by beams extending in between different openings present.

In an advantageous embodiment, the carrier comprises a lid for a beaker. Such a lid makes it possible to cultivate a crop unit on a beaker with a quantity of water, or to place an already cultivated crop unit on a beaker after being raised, so that via the beaker it can be provided with water and nutrients on further handling and transport, and so that a crop unit raised on water can also be offered on water to a consumer.

However, the carrier may also comprise an element having a plurality of arrangement locations for receiving therein always a medium for allowing individual crop units to be rooted therein, which element is intended for placement in a humid environment, such as in a water bath, for growing a plurality of crop units at the same time.

Alternatively, a device according to the invention may comprise an element having a plurality of arrangement locations, each of which is adapted to receive a carrier as defined in the foregoing. Several crop units can then be simultaneously cultivated on a common "grow-up element", and then be treated separately from each other after the cultivation, for example to place each crop unit on its own reservoir with a volume of water by means of its carrier.

A mat can be held in place with respect to a support by a part that clamps against, locks onto, or otherwise fixes on the carrier. In this way a relatively thin and thus flexible mat is prevented from being released from the carrier when, for example, a crop has not yet grown to the support with its roots.

A part which, for keeping the mat in place, can be fixed on, or can otherwise be positioned relative to, the carrier can be fixed to the mat, or at least hold the mat, so as to form a kind of frame or support for the mat. matt, and to make the relatively small, thin and flexible mat easily manageable, for example when removing the mat from a seeding or cutting tray, and transplanting the mat with a slightly developed crop unit thereon to a carrier.

A part as mentioned may comprise an annular portion, in order to be able to extend along a circumference of the mat.

The part may further have a protruding arm or lip to serve as a handle when handling the part and a possibly attached mat with a possible crop thereon, when placing or removing the part into or out of a sowing or cutting tray, and placing the part or an assembly of said part and a mat into or out of a carrier or removing this.

A part where the mat is attached to, or which holds the mat, and which makes it manageable for placement in a carrier, is also called "holder" in the context of this application.

Further advantageous embodiments of a device according to the invention, as well as advantageous elaborations of a method according to the invention, are as described in the following and as defined in the appended claims.

### BRIEF SUMMARY OF THE DRAWINGS

These and other aspects, features and advantages of the present invention will be further elucidated by the following description of one or more exemplary embodiments with reference to the drawings, in which like reference numerals designate like or similar parts, in which designations "under / above", "higher / lower","left / right" etc only relate to the orientation shown in the figures, and in which:
Figure 1 shows various parts of a device for growing a single crop unit according to the invention, including a mat for rooting the crop unit therein and a carrier for the mat formed as a lid, and a beaker on which said lid can be placed;
- Figure 2 shows the various parts of Figure 1 in an assembled state;
- Figure 3 shows the mat of Figure 1 in combination with a holder for the mat;
- Figures 4a and 4b respectively show a sowing or cutting tray and a carrier for the further cultivation of a plurality of crop units, each having a plurality of arrangement places on which each time an assembly of the parts of Figure 3 is arranged;
- Figures 5a and 5b respectively show a carrier, with a plurality of set-up locations on which each time a lid as in Figure 1 is arranged, with in said lid an assembly of the parts of Figure 3 and the parts of Figure 1 in a assembled state, wherein the mat forms part of an assembly of the parts as shown in Figure 3;
- Figures 6a and 6b each show a plan view of a carrier formed as a lid as shown in Figure 1;
- Figure 7 shows a mat-rooted crop supported in a carrier formed as a lid, the carrier being placed as a lid on a beaker with a volume of water;
- Figure 8 schematically shows a carrier according to the present invention.

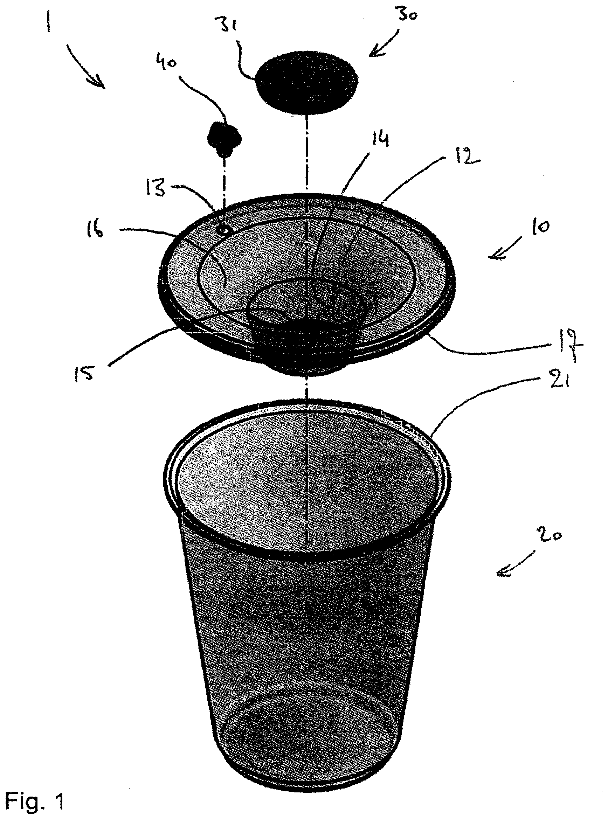

With reference to Figure 1, a device 1 for growing a crop unit comprises a medium 30 in which the plant unit can root, and a carrier 10 for the medium 30.

In the embodiment shown, the medium 30 comprises a mat 31 of non-woven fiber material with capillary properties. The mat 31 in the shown embodiment is flat, round, and relatively thin.

The carrier 10 has a recessed portion 12, in which the mat 31 can be arranged, with a bottom 15 for supporting the mat 31. In the bottom 15, openings are provided (not visible in Figure 1), which are covered by the mat 31 when that mat 31 is arranged in the recessed portion 12.

At a circumferential edge, the carrier 10 is provided with an additional opening 13, which is left uncovered by the mat 31 when it is arranged in the recessed portion 12.

The additional opening 13 can be closed with a separate cap 40.

Instead of a separate cap 40, another means can also be provided, which can be arranged to close off the additional opening 13, which means may possibly be stuck to the carrier 10, so that it can not be lost. For example, the means may comprise a tab that is to be bent to engage the additional opening 13 to seal it.

The recessed portion 12 has a circumferential wall 14, which, in the case of a mat 31 placed at the bottom 15, extends over at least a certain height above the mat 31.

Around the recessed portion 12, adjacent to the peripheral wall 14, the carrier 10 has a portion 16 which runs towards the recessed portion 12. The circumferential wall 14 and the descending portion 16 thus form a funnel-shaped whole 14, 16 in the embodiment shown.

In the embodiment shown, the mat 31 is separate from the support 10, although the mat 31 can also be fixed to the support 10 within the invention, for example by being welded thereto.

The recessed portion 12 has a round cross-section, so that the mat 31, which in the embodiment shown is round as well, can be received in the recessed portion 12.

The device 1 further comprises a beaker 20, while the carrier 10 is formed as a lid which can be placed on that beaker. In the embodiment shown, the carrier 10 has for this purpose a snap edge 17, which can be snapped onto a cooperating edge 21 of the cup 20.

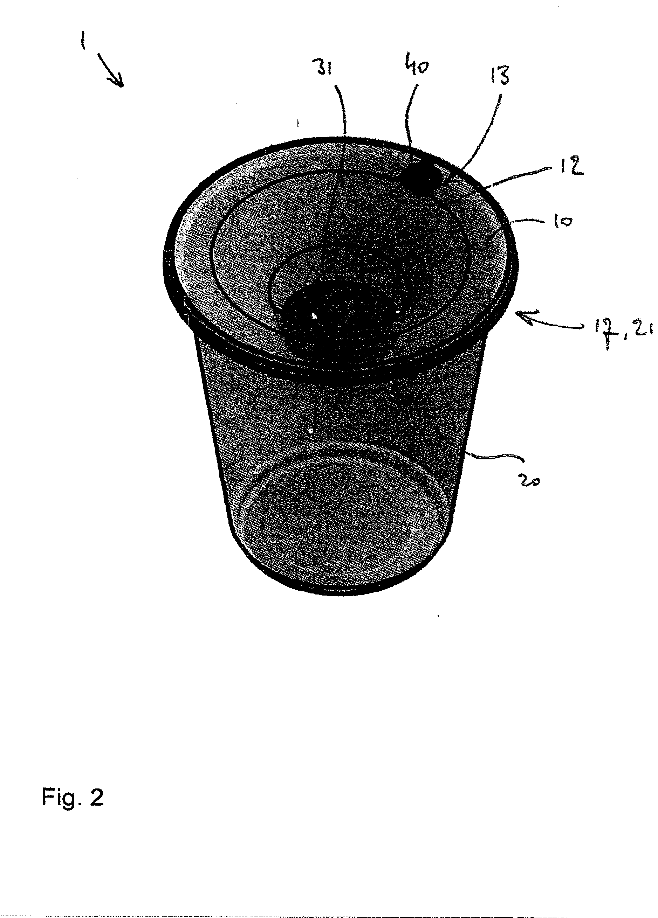

With reference to Figure 2, in an assembled state of the parts of Figure 1, the carrier 10 is placed on the beaker 20 as a lid, wherein the mat 31 is arranged in the recessed portion 12 of the lid-shaped carrier 10, and wherein the additional opening 13 is closed by the cap.

Certainly in the case that the mat 31 is moist, the beaker 20 in the state of FIG. 2 is substantially air-tight and water-tight, by at least along the co-operating edges 17, 21 an air-tight and watertight closure of the lid-shaped carrier 10 on the beaker 20, an air-tight and watertight closure of the cap 40 on the additional opening 13, and an obstruction to the passage of water and air through said openings in the bottom of the lid-like carrier 10, which is caused by sealing of that openings by the mat 31. The assembly 1 of Fig. 2 is therefore virtually leak-proof, even when it falls over or is kept upside down, and water from the cup 20 reaches the carrier 10.

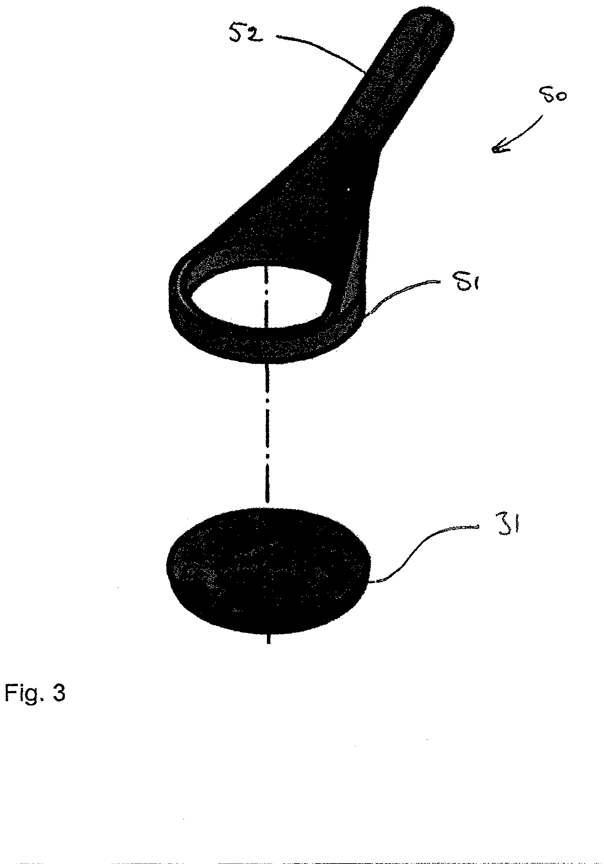

With reference to Figure 3, a holder 50 can be provided for securing the mat 31 in or on a carrier 10.

In the embodiment shown, the holder 50 comprises an annular base portion 51, which is formed to secure itself against the circumferential wall 14 of the recessed portion 12 of a carrier 10 as shown in Figure 1. In the case of a loose mat 31, the mat 31 is thus confined with respect to the carrier 10, in order to be held against the bottom 15. However, the mat 31 can also be fixed to the holder 50, and in particular to the ring-shaped base part 51, so that it is also secured by itself on the carrier 10 by securing the holder 50, and together with the holder 50 manageable. For facilitating the securing and removal of the assembly of a holder 50 and the mat 31, in the embodiment shown, an annular section 52 is provided with an projecting arm 52, which can serve as a handle

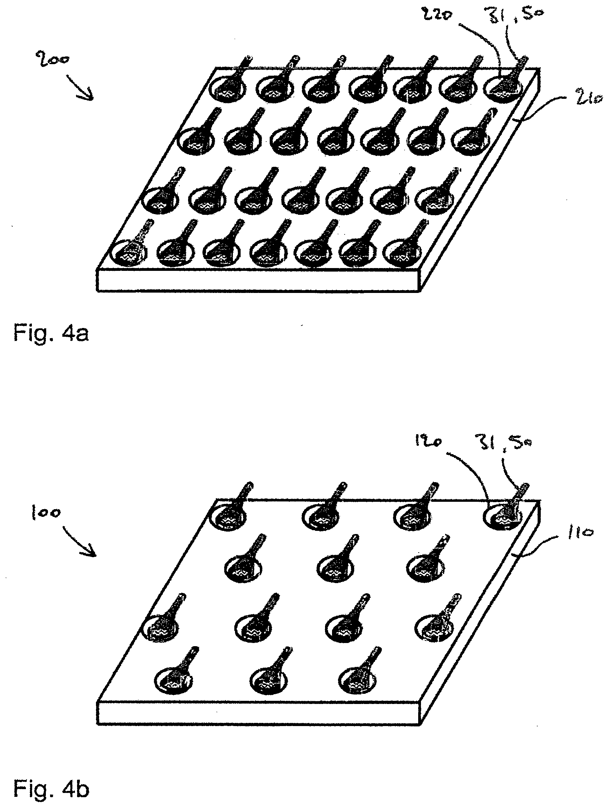

With reference to Figure 4a, in an alternative embodiment, a device 200 according to the invention comprises a carrier 210 with a plurality of openings 220, each of which is adapted to receive a mat 31, or at least an assembly of a mat 31 and a holder 50, to be able to serve as support for a plurality of mats 31, for instance during germination of seed which can be provided on each of the mats 31 in order to cultivate a crop unit on each of the set-up locations formed by the openings 220. For that purpose, the carrier 210 can be placed in a humid environment. The carrier 210 shown serves in such a case as what is known under the term "seed or cutting tray".

With reference to Figure 4b, a device 100 according to the invention can also comprise a carrier, or culture element 110, with openings 120 which form set-up locations for crop units to be cultivated, and which for this purpose each are arranged to receive a mat 31 or an assembly of a holder 50 and a mat 31, with a crop unit at a certain development stage on each mat 31, said openings 120 being further apart than the openings 220 of a seeding or cutting tray 210. When growing, crop units can at a certain moment be transplanted from a sowing or cutting tray to such a growing element by displacement of a mat 31 with an optional holder 50 thereon. On harvest, the mat and any holder therefor can be cut loose from the crop units so that harvested crops can be further traded free of mat and carrier.

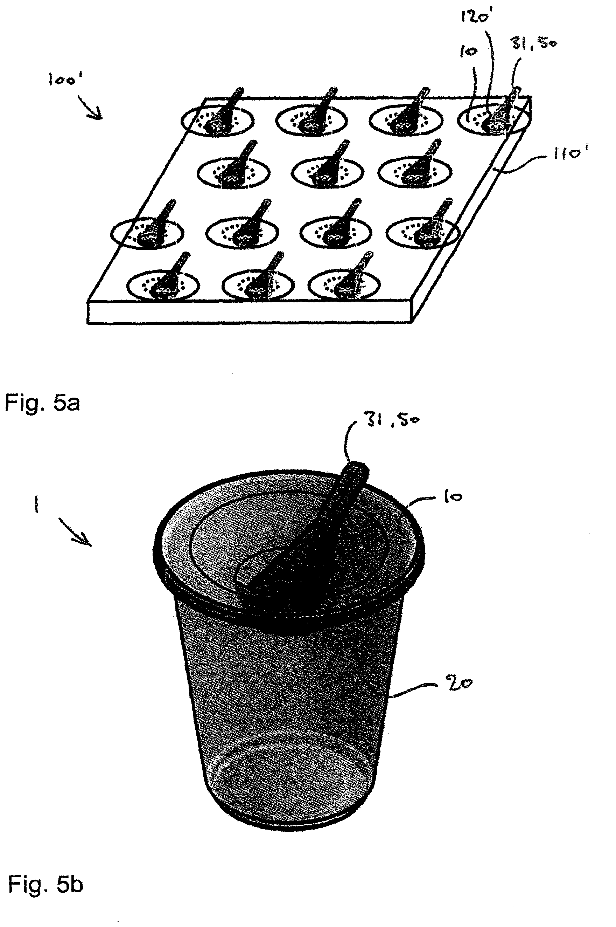

With reference to Figure 5a, a device 100 'according to the invention may however, in a special embodiment, also comprise an element 110', which has a plurality of set-up locations 120', which are each arranged, or at least are adapted to the shape of a carrier 10 for a mat 31 for raising an individual crop unit, with a possible holder 50 for that mat 31, so as to be able to receive a plurality of mats 31, each supported by a separate carrier 10, and each of which via their carrier 10 are supported by said element 110 '. This makes it possible, after the cultivation of a plurality of crop units, to handle each of these crop units separately with their carrier 10.

With reference to Figure 5b, each carrier 10 is advantageously formed as a lid 10 for a beaker 20 as described above, so that after cultivation on a common supporting growing element 110', cultivated crop units can each be placed on their own beaker 20, for further trading of the crop units while each crop unit remains "on water".

Crop units can, if desired, only be transplanted to carriers 10 supported by a common element 110' after partial cultivation or sprouting on a seed or cutting tray, by transplanting mats 31 and any containers 50 therefor.

After growing on a sowing or cutting tray, crop units in a given development stage can also be placed directly in a carrier 10 supported by a beaker 20, by transplanting mats 31 and any containers 50 therefor.

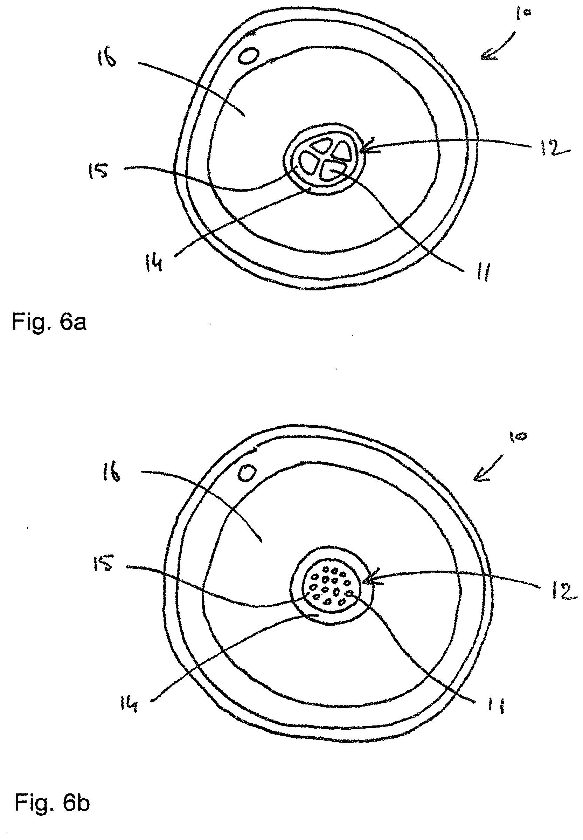

Figures 6a and 6b illustrate the presence of openings 11 in the bottom 15 of the recessed portion 12 of a carrier 10 formed as a lid for a beaker. The openings 11 can be larger openings (Figure 6a) or smaller ones, such as perforations of the bottom 15 (Figure 6b). A single opening is also possible. The only criterion is that a mat 31 or other medium 30 can cover an opening or openings 11 in a lid 10, or at least can seal a passage present through the lid 10, possibly by filling up such a passage. Such a function could in principle also be fulfilled by a thicker mat, or by, for example, a rolled-up mat.

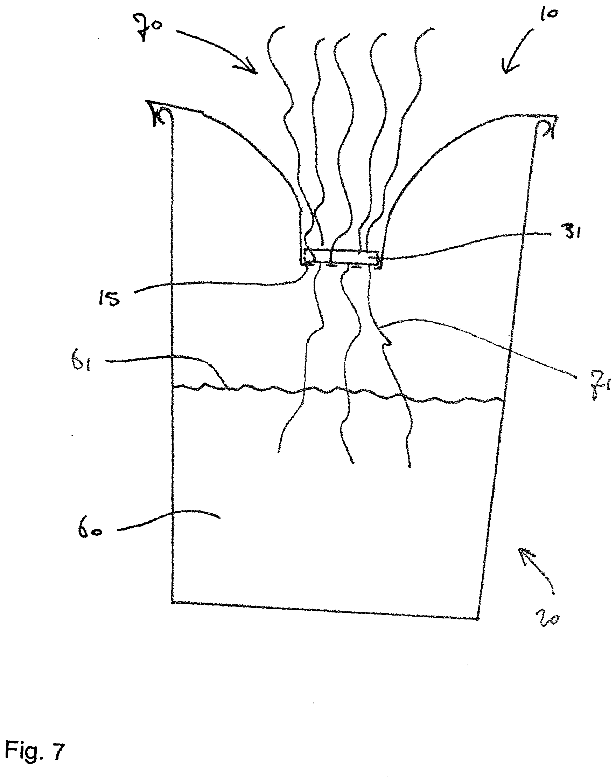

With reference to Figure 7, in an assembly of a carrier 10 formed as a lid for on a cup 20 and such a beaker 20, the bottom 15 of said lid 10, or at least a mat 31 supported by said bottom 15, or otherwise carried by the carrier 10, is at some distance above the water level 61 of a water volume 60 present in the beaker 20. In the embodiment shown, the mat 31 is in that case arranged in the lid 10 in such a way that it can be kept moist by condensation water which at the inner side of the lid 10 can run downwards, or at least along the lid 10, so as to reach the openings 11 covered by the mat. A so-called "wicket", or moisture-conducting element that hangs in the water volume, and which extends up to or in the mat 31, is absent. However, it is possible for the roots 71 of a crop 70 rooting in the mat 31 to reach into the water volume in order to be able to provide the crop 70 with water and nutrients.

In the foregoing it has been explained how, according to the invention, seedlings can root in an apparatus according to the present invention during the first stage of their life, even including germination. When the roots have grown sufficiently, they can be transferred to a plate-shaped carrier, which is provided with a plurality of through openings, and which floats in a water bath. Such a carrier consists in practice of a plate of polystyrene foam with light-conical holes, which are wider at the top than at the bottom. A holder with culture mat and rooted plant is placed in such a hole, and drops therein to a depth where the diameter of the conical hole is equal to the outside diameter of the holder. In the space below the holder, a substantially closed chamber is then defined, in which air is located and a humid atmosphere. This must be sufficient to allow the roots of the plant to grow further until they finally reach the water surface.

The present invention also relates to an improvement of such a carrier.

With existing carriers, it is a problem that they are made of Styrofoam (Tempex), or expanded polystyrene. Although this has a good buoyancy, it is a disadvantage that the material has intrinsic gaps and crevices in which organisms, such as algae and fungi, can settle. This problem worsens with time, as it is fragile and breaks quickly. It is possible to clean the surface of the carrier, but a cleaning operation never reaches the interior of such gaps and crevices, so that organisms remain that grow out within a short time again.

Furthermore, it is a problem that the roots of the plant can grow in such gaps and crevices. The plants then get stuck to the carrier. When at some moment the plants have to be removed, the roots are torn broke, which not only slows down the removal process but, more importantly, causes damage to the root system, causing the plant to become more susceptible to germs.

Furthermore, a problem is that the material absorbs water, and shrinks.

Another problem with existing carriers is that the conical holes do not properly define the height where the holders come to rest. The distance from the plants to the water surface then varies from plant to plant, which translates to an uneven development of the different plants, which is undesirable for a grower.

The present invention proposes an improved carrier where the problems mentioned are eliminated or at least reduced.

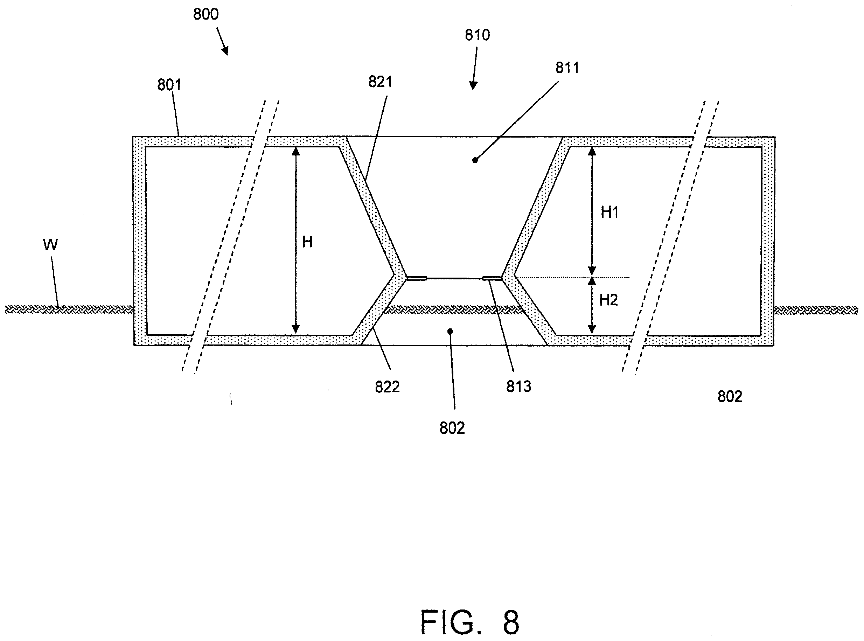

Figure 8 shows a schematic cross-section of a portion of a plate-shaped carrier 800 according to the present invention. The plate-shaped carrier, which may for instance have a size of 1 × 1 m² at a height of, for example, 5-10 cm, is formed as a hollow body, for example by blow molding, of a suitable plastic such as, for example, PVC, PE, PP. Such a material has a smooth outer surface, is robust, and can be cleaned thoroughly and easily.

The carrier 800 has two mutually parallel main surfaces 801 and 802 with a mutual distance H, which are horizontally oriented during use. In various places, for example according to a regular pattern as described earlier, the carrier 800 has vertical passages 810. Even if these passages are identical to the known passages, the material used already offers advantages over the presently usual Tempex.

In the embodiment shown, each passage 810 has a first conical portion 811 and a second conical portion 812. The first conical portion 811 has its largest diameter at the first main surface 801, while the second conical portion 812 has its largest diameter at the second main surface 802 The respective cone-shaped side walls 821 and 822 of the two conical parts 811 and 812 meet at the narrowest part of the vertical passage 810; at this location, the vertical passage 810 is provided with an inwardly directed peripheral flange 813 formed integrally with the conical side walls 821 and 822.

The circumferential flange 813 provides a good definition of the height at which the holder with the plant comes to stand.

The circumferential flange 813 can lie symmetrically between the two main surfaces. In the preferred embodiment shown, this circumferential flange 813, measured in a direction perpendicular to the main surfaces 801 and 802, has a distance H1 to the first main surface 801 and a distance H2 the second main surface 802, with H2 smaller than H1.

Due to the asymmetrical shape, the plate 800 can be used in two orientations. In the orientation shown, the circumferential flange 813 is at a relatively short distance from the water surface. The small roots will quickly touch the water. Furthermore, as a result of adhesion to the surface of the side wall 822, the water will creep upwards and wet the material of the mat 31, as a result of which a good airtight seal of the underlying space will be achieved.

When the roots have grown further, the plate can be reversed, which effectively results in the circumferential flange 813 lying at relatively larger distance from the water surface. In addition, the space under the mat 31 becomes larger, causing more air to be available. This is favorable for further development of the roots.

An advantage of the carrier 800 proposed by the present invention is better thermal insulation.

In a further preferred embodiment, the carrier 800 is substantially light-tight, in order to counteract algae growth in the space between the circumferential flange 813 and the water surface. Algae growth is competitive with root growth, and in the event of death of the algae, the water becomes too rich in nitrates.

The light-tightness can be achieved by making the carrier of black plastic material, but this has the disadvantage that the carrier heats up relatively quickly. In order to avoid this temperature problem, the material is preferably of a very light color, preferably white. But light plastics have the disadvantage that the free path length of photons therein is longer, so that it is necessary to make the carrier of thicker material, but this has the disadvantage that the carrier becomes relatively heavy.

In order to solve these problems together, the material of the support 800 may have a two-layer or multilayer structure, wherein the outer layer is white, and wherein a deeper layer is black. This, however, requires the use of co-extrusion machines. In an alternative approach, the present invention proposes to use a white plastic, for example a PVC, PE, PP to which TiO₂-based pigment has been added, and to add small light-blocking particles to the plastic material. When the dimensions of these particles are sufficiently small, these particles remain suspended in the liquid phase of the plastic. As the concentration of these particles increases, they will jointly block an ever increasing percentage of the transmitted light. Thanks to this aspect of the present invention, it is possible to achieve the same degree of light attenuation at a smaller material thickness, which saves material, saves material costs, and makes the carriers 800 easier to handle.

It will be clear to a person skilled in the art that the invention is not limited to the exemplary embodiments discussed above, but that various variants and modifications are possible within the scope of the invention as defined in the appended claims. Even if certain features are mentioned in different dependent claims, the present invention also relates to an embodiment which has these features together. Even if certain features are described in combination with each other, the present invention also relates to an embodiment in which one or more of those features have been omitted. Features that are not explicitly described as being essential may also be omitted. Any reference numbers used in a claim should not be interpreted as limiting the scope of that claim.

## Claims

1. A **plate-shaped** carrier (800) for receiving thin mats (31) having crop units rooted therein, said carrier being formed as a hollow body having two mutually parallel main surfaces (801, 802) which at a plurality of locations is provided with passages (810) extending between said main surfaces;
[] wherein each passage (810) comprises a first conical part (811) and a second conical part (812), which have their largest diameter at the respective main surfaces, and which meet each other at the narrowest part of the passage;
[] wherein the narrowest part of the passage is provided with an inwardly directed peripheral flange (813), which is preferably formed integrally with the conical side wall of the passage;
[] wherein the narrowest part of the passage is asymmetrical with respect to the main surfaces;
**wherein said carrier is adapted and intended to be floating in a water bath in two possible orientations, wherein in a first orientation the peripheral flange (813) is at a relatively short distance from the water surface so that small roots will quickly touch the water, while in a reversed orientation, suitable when the roots have grown further, the circumferential flange (813) is at relatively larger distance from the water surface.**

2. **Carrier according to claim 1, provided with a plurality of mats (31) having crop units rooted therein and being arranged on the respective circumferential flanges (813) of the respective passages (810), wherein, with the carrier in said first orientation, as a result of adhesion to the surface of the respective side walls (822), the water will creep upwards and wet the material of the respective mats, as a result of which a good airtight seal of the underlying space will be achieved.**

3. Carrier according to **claim 1,** wherein the carrier is substantially light-tight.

4. Carrier according to claim 3, wherein the carrier is made of a plastic material to which light-blocking particles have been added.

5. Crop cultivation system comprising a carrier according to any of claims 1-3 and a plurality of holders (50) for holding respective mats (31) having crop units rooted therein, each holder (50) having an annular base portion (51) and adapted to be standing on a respective circumferential flange (813).

6. Method for growing crop units, the method comprising the steps of:
- providing mats (31) having crop units rooted therein;
- providing a carrier according to any of claims 1-3;
- arranging said carrier to be floating in a water bath in said first orientation;
- placing the mats (31) on respective circumferential flanges (813) of the respective passages (810) at said relatively short distance from the water surface;
- allowing the roots of said crop units to touch the water and to grow further;
- when the roots have grown further, reversing the carrier to be in said reversed orientation, and placing the mats (31) on respective circumferential flanges (813) of the respective passages (810) at said relatively relatively larger distance from the water surface.

7. Method according to claim 6, wherein each mat (31) is held by a respective holder (50) having an annular base portion (51) and standing on a respective circumferential flange (813).

## Patentansprüche

1. Plattenförmiger Träger (800) zur Aufnahme von dünnen Matten (31) mit darin verwurzelten Pflanzeneinheiten, wobei der Träger als Hohlkörper mit zwei zueinander parallelen Hauptoberflächen (801, 802) ausgebildet ist, welcher an mehreren Stellen mit sich zwischen den Hauptoberflächen erstreckenden Durchgängen (810) versehen ist;
wobei jeder Durchgang (810) einen ersten konischen Teil (811) und einen zweiten konischen Teil (812) umfasst, die ihren größten Durchmesser an den jeweiligen Hauptoberflächen haben und die sich an dem schmalsten Abschnitt des Durchgangs treffen;
wobei der schmalste Abschnitt des Durchgangs mit einem nach innen gerichteten Umfangsflansch (813) versehen ist, der vorzugsweise einstückig mit der konischen Seitenwand des Durchgangs ausgebildet ist;
wobei der schmalste Abschnitt des Durchgangs asymmetrisch in Bezug auf die Hauptoberflächen ist;
wobei der Träger dazu geeignet und bestimmt ist, in einem Wasserbad in zwei möglichen Ausrichtungen zu schwimmen, wobei in einer ersten Ausrichtung der Umfangsflansch (813) in einem vergleichsweise kleinen Abstand zur Wasseroberfläche ist, so dass kleine Wurzeln schnell das Wasser berühren, während in einer umgekehrten Ausrichtung, die geeignet ist, wenn die Wurzeln weiter gewachsen sind, der Umfangsflansch (813) in einem vergleichsweise größeren Abstand zur Wasseroberfläche ist.

2. Träger nach Anspruch 1, der mit mehreren Matten (31) versehen ist, in denen Pflanzeneinheiten verwurzelt sind und die auf den jeweiligen Umfangsflanschen (813) der jeweiligen Durchgänge (810) angeordnet sind, wobei mit dem Träger in der ersten Ausrichtung infolge der Haftung an der Oberfläche der jeweiligen Seitenwände (822) das Wasser nach oben kriecht und das Material der jeweiligen Matten befeuchtet, wodurch eine gute luftdichte Abdichtung des darunter liegenden Raums erreicht wird.

3. Träger nach Anspruch 1, wobei der Träger im Wesentlichen lichtundurchlässig ist.

4. Träger nach Anspruch 3, wobei der Träger aus einem Kunststoffmaterial besteht, dem lichtblockierende Partikel zugesetzt wurden.

5. Pflanzenanbausystem umfassend einen Träger nach einem der Ansprüche 1-3 und mehreren Haltern (50) zum Halten der jeweiligen Matten (31) mit darin verwurzelten Pflanzeneinheiten, wobei jeder Halter (50) einen ringförmigen Basisteil (51) aufweist und geeignet ist, auf einem jeweiligen Umfangsflansch (813) zu stehen.

6. Verfahren zum Anbau von Pflanzeneinheiten, wobei das Verfahren die folgenden Schritte umfasst:
- Bereitstellen von Matten (31) mit darin verwurzelten Pflanzeneinheiten;
- Bereitstellen eines Trägers nach einem der Ansprüche 1-3;
- Anordnen des Trägers so, dass er in einem Wasserbad in der ersten Ausrichtung schwimmt;
- Platzieren der Matten (31) auf den jeweiligen Umfangsflanschen (813) der jeweiligen Durchgänge (810) in dem vergleichsweise kleinen Abstand zur Wasseroberfläche;
- Erlauben, dass die Wurzeln der Pflanzeneinheiten das Wasser berühren und weiter wachsen können;
- wenn die Wurzeln weiter gewachsen sind, Umdrehen des Trägers in die umgekehrte Ausrichtung und Platzieren der Matten (31) auf den jeweiligen Umfangsflanschen (813) der jeweiligen Durchgänge (810) in dem vergleichsweise größeren Abstand zur Wasseroberfläche.

7. Verfahren nach Anspruch 6, wobei jede Matte (31) von einem jeweiligen Halter (50) gehalten wird, der einen ringförmigen Basisteil (51) aufweist und auf einem jeweiligen Umfangsflansch (813) steht.

## Revendications

1. Support en forme de plaque (800) destiné à recevoir des tapis minces (31) dans lesquels sont enracinées des unités de culture, ledit support se présentant sous la forme d'un corps creux ayant deux surfaces principales mutuellement parallèles (801, 802) qui, en plusieurs endroits, est pourvu de passages (810) s'étendant entre lesdites surfaces principales ;
dans lequel chaque passage (810) comprend une première partie conique (811) et une deuxième partie conique (812), dont le plus grand diamètre se trouve au niveau des surfaces principales respectives, et qui se rejoignent au niveau de la partie la plus étroite du passage ;
dans lequel la partie la plus étroite du passage est pourvue d'une bride périphérique dirigée vers l'intérieur (813), qui est de préférence formée d'un seul tenant avec la paroi latérale conique du passage ;
dans lequel la partie la plus étroite du passage est asymétrique par rapport aux surfaces principales ;
dans lequel ledit support est adapté et destiné à flotter dans un bain d'eau dans deux orientations possibles, dans lequel, dans une première orientation, la bride périphérique (813) est à une distance relativement petite de la surface de l'eau afin que des petites racines touchent rapidement l'eau, tandis que dans une orientation inversée, appropriée quand les racines ont grandi, la bride périphérique (813) est à une distance relativement grande de la surface de l'eau.

2. Support selon la revendication 1, pourvu d'une pluralité de tapis (31) dans lesquels sont enracinées des unités de culture et qui sont placés sur les brides périphériques respectives (813) des passages respectifs (810), dans lequel, lorsque le support est dans ladite première orientation, en conséquence de l'adhérence à la surface des parois latérales respectives (822), l'eau monte et mouille la matière des tapis respectifs, en conséquence de quoi l'on obtient une bonne étanchéité à l'air de l'espace sous-jacent.

3. Support selon la revendication 1, dans lequel le support est substantiellement opaque.

4. Support selon la revendication 3, dans lequel le support est fait d'une matière plastique dans laquelle des particules arrêtant la lumière ont été ajoutées.

5. Système cultural comprenant un support selon l'une quelconque des revendications 1 à 3 et une pluralité de porte-tapis (50) destinés à retenir des tapis respectifs (31) dans lesquels sont enracinées des unités de culture, chaque porte-tapis (50) comportant une partie de base annulaire (51) et étant adapté pour reposer sur une bride périphérique respective (813).

6. Procédé pour faire croître des unités de culture, le procédé comprenant les étapes suivantes :
- fournir des tapis (31) dans lesquels sont enracinées des unités de culture ;
- fournir un support selon l'une quelconque des revendications 1 à 3 ;
- disposer ledit support de façon à le faire flotter dans un bain d'eau dans ladite première orientation ;
- placer les tapis (31) sur des brides périphériques respectives (813) des passages respectifs (810) à ladite distance relativement petite par rapport à la surface de l'eau ;
- laisser les racines desdites unités de culture toucher l'eau et croître davantage ;
- lorsque les racines ont grandi, retourner le support pour qu'il soit dans ladite orientation inversée, puis placer les tapis (31) sur des brides périphériques respectives (813) des passages respectifs (810) à ladite distance relativement grande par rapport à la surface de l'eau.

7. Procédé selon la revendication 6, dans lequel chaque tapis (31) est retenu par un porte-tapis respectif (50) comportant une partie de base annulaire (51) et reposant sur une bride périphérique respective (813).
